# EUROPEAN PATENT APPLICATION

(11) **EP 2 884 452 A1**
(43) Date of publication of application: **17.06.2015**
(21) Application number: 14197491.5
(22) Date of filing: 11.12.2014
(51) Int. Cl.: G06Q 40/02

(54) **Loan matching platform system**

(30) Priority: 13.12.2013 TW 102223537 U
(71) Applicant: Hsu, Kuo-Liang, Taipei City 10682 (TW)
(72) Inventor: Hsu, Kuo-Liang, 10682 Taipei City (TW)
(74) Representative: Lang, Christian

(57) **Abstract**

A loan matching platform system, including an application operating unit, a membership information unit, a risk assessment unit and a transaction matching unit, which enables lenders and lenders to reach a loan matching interface through a cloud network. The loan matching platform system of the present invention provides anonymous user membership with high privacy features, and allow lenders to select the appropriate investments, which has reduced investment risk, and ensure returns on investments according to the personal financial rating of the lenders while having advantages of free guarantees, fast and security, etc., and is particularly useful in small and short-term investments.

## Description

### BACKGROUND OF THE INVENTION

### 1. Field of the invention

The present invention relates to the field of an electronic financial system, and more specifically relates to a loan matching platform system.

### 2. Description of Related Art

With the rapid development of social economy and information technology, there is a growing demand for money, which are usually provided by a bank or a private lending market for loans or investments. Although the bank can provide personal loans or low risk of security investment services, it is subject to rigorous identification in order to guarantee transactions, and inconvenience to individuals or small businesses, mostly the return on investment is not good enough. In addition, the private lending market is huge, but lack of legal, privacy, security, fast online lending services.

Online clearinghouses, lender networks, and other loan origination sources ("lead sources") for various types of loans are fast gaining in popularity. Small investment products generally contain funds, foreign exchange, stocks, insurance policies, etc., whose period has at least 6-12 months and their interests are less than 2%. Also, the investments in venture capital, hedge funds have a contribution quota and are more potentially high-risk investments. It is not for the lenders who just having small amount of money. In addition, the information tech is advancing in today, a lot of functions network services can provide are becoming increasingly complex and progressive, such as the use of Internet technology to achieve communication through peer (peer-to-peer), but there are some risks of privacy information leakage.

At present, E-finance platforms, for risk assessment, collection and payment of funds, lending rates, has no strict control or treatment, and some expected accumulated return and associated risk are adjusted by users themselves to cause many lending disputes. Much of this confusion results from the present decentralized marketplace in which borrowers and loan providers simply search for one another, such as through Internet searches (borrowers) and conventional and electronic mailings (loan providers). Accordingly, there is a need for a centralized and automated system for borrowers to search which lenders are available under the borrower's loan situation and provide loan providers with potential applicants. Moreover, the loan matchmaking is safe, fast and completely anonymous with high return rate.

### SUMMARY OF THE INVENTION

The objective of the present invention is to provide a loan matching platform system for matching qualified borrowers and prospective lenders via a loan matching interface over the Internet.

In order to accomplish the above objective, one embodiment of the loan matching platform system comprises: an application operating unit providing a plurality of applicants to be lenders or borrowers in registration; a membership information unit receiving and recording the application information of the lenders and the borrowers; a risk assessment unit auditing the borrower's loan information to generate a credit rating; and a transaction matching unit coupled to the applications operating unit, the membership information unit and the risk assessment unit, providing a loan matching between lenders and borrowers, wherein the loan matching platform system is an interface of cloud computing for matching loan between borrowers and lenders.

In the loan matching platform system, the application operating unit provides safe and rapid membership application, the membership information unit records, maintains and manages membership information to prevent leakage of personal data in the security issues, the risk assessment unit reviews and monitors the lender's credit rating, so that each has an exclusive personal loans according to Personal Financial Ranking, PFR, providing lenders to determine and select the most suitable investment portfolio or the amount of investment, and the transaction matching unit provides convenient loan match with high privacy. Accordingly, the present invention is an online loan matching platform as a matchmaking agent, which has strict implementation of risk management and control, transaction security, investment efficiency and cost reduction.

### BRIEF DESCRIPTION OF THE DRAWINGS

Fig. 1 is a block diagram view of the loan matching platform system according to one embodiment of the invention;
Fig. 2 is another block diagram view of the loan matching platform system according to one embodiment of the invention.

### DETAILED DESCRIPTION OF THE INVENTION

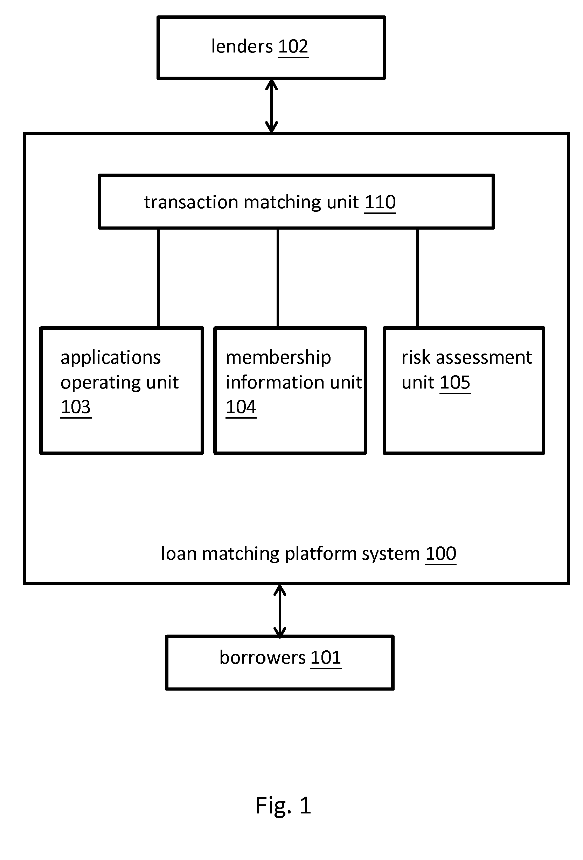

Referring Fig. 1 a block diagram of one embodiment of the loan matching platform system according to the present invention is shown. The loan matching platform system 100, which provides loan matching for lenders 102 and borrowers 101, includes an application operating unit 103, a membership information unit 104, a risk assessment unit 105 and a transaction matching unit 110.

It will be understood that for the purposes of the present application the terms "borrower" and "applicant" may be used interchangeably, and refers to an individual or party desiring to obtain a loan through the system of the present invention. In a similar fashion, the terms "lender" and "lenders" refer to any party providing loans to borrowers through the system of the present invention.

In the loan matching platform system 100, the application operating unit 103 provides a lending and borrowing function for matching qualified borrowers with prospective lenders to initiate and complete a loan matching. The membership information unit 104 records information of transaction regarding to activities of the lenders and the borrowers. The risk assessment unit 105 audits the borrower's loan information to generate a credit rating. And the transaction matching unit 110 is coupled to the applications operating unit 103, the membership information unit 104 and the risk assessment unit 105, provides a loan matching for lenders and borrowers. Specifically, the loan matching platform system 100 is an interface of cloud computing for matching loan events between qualified borrowers 101 and perspective lenders 102.

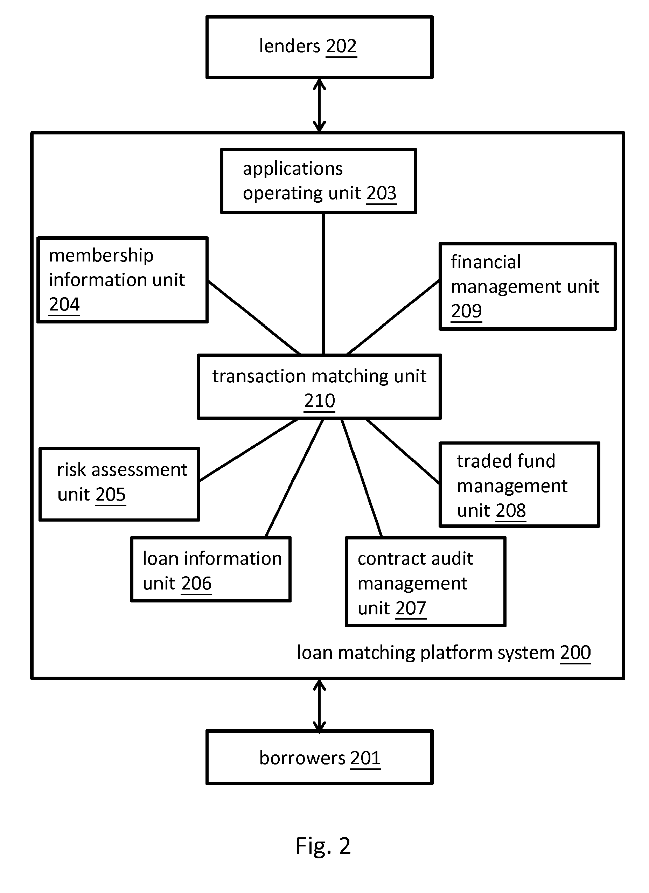

Fig. 2 shows a block diagram of another embodiment of the loan matching platform system according to the present invention. The loan matching platform system 200 comprises: an application operating unit 203, a membership information unit 204, a risk assessment unit 205, a loan information unit 206, a contract audit management unit 207, a traded fund management unit 208, a financial management unit 209 and transaction matching unit 210. The borrowers 201 and lenders 202 may reach a loan matching in the loan matching platform system 200.

In one embodiment, for adding a formal member to the system, applying step and verifying step are required in the application operating unit 203. If application process is not complete, an applicant's circumstances don't qualify that applicant for the membership, applicant cannot become a member due to failure in the verifying step. The applicant may cancel that application process, and then restart a new process. The applicant should be a natural person, who inputs his personnel information to apply a membership in application operating unit 203, whereby the input circumstances are stored and verified, which include being a national citizen with 20 years old above, and having a formal job.

In membership information unit 204 the information includes personal identify information, member ID and password. The member ID and password are set by applicants and stored in the membership information unit 204 in order to login to the platform system 200. The personal identify information includes, but not limited to, name,

ID number, nick name, phone number, address, email and so on.

The risk assessment unit 205 audits the borrowers' loan information to generate credit rating and check the credit rating continuously. The credit rating is generated from credit parameters depending on borrower's information, and supports lenders to decide the amount of investment. In one embodiment, the process of personal credit audit includes renew step and audit step. A borrower provides his credit information applied from Joint Credit Information Center, if his credit information is correct, the credit grating is generated and renews his credit rating. If his credit information is incorrect, the renew step and audit step will not be executed, there is no credit grating output and the process shows obsolete.

The credit rating is composed of multiple credit parameters according to the credit information applied from Joint Credit Information Center. The credit information includes: personal data, such as identification, age and marital status, etc.; profession, such as occupation, seniority and professional identity, etc.; proof of income, such as the recent average salary and other income for the six months, etc.; financial documents, such as real estate gross, gross of marketable securities and gross of motors and vehicles; and financial history, such as late payment times of credit card, number of credit cards and debt assignment times. A score is calculated from those credit parameters to generate a credit grating. When the risk assessment unit 205 checks the information and gives a D class credit grating. The loan requirement from the borrower will not post on the platform system. If the borrower has a A, B or C class credit grating, the loan requirement will be posted up, as credit grating is renewed.

The risk assessment unit 205 has a comprehensive understanding of financial or credit status of the borrower without biased. And credit grating generated from personal information can support the lenders to select the good borrowers for investment ratio and interest on investment decisions. Therefore, the credit grating can help lenders raise investment efficiency, and reduce the risk of investment.

A loan information unit 206 is coupled to the transaction matching unit 210, and provides the lenders to post Online Funding Inquiries and investment information to the lenders. In one embodiment, the borrower 201 initiates an application process with the application operating unit 203 to apply a membership. Then the membership information unit 204 identify the borrower's information, the borrower provides Credit Information to the risk assessment unit 205 to generate a credit rating. Next, the loan information unit 206 posts Online Funding Inquiries and investment information to the lenders or lenders. The lenders decide his amount of investment. The investment information includes investment ratio and interest, which is calculated from the ratio. In one embodiment, the loan information unit 206 divides loan amount into 10 divisions for the lender to select at least one as investment. The profitable investment of interest allocation is calculated according to ratio, and the information of investment ratio and interest is public. On the other side, due to division of money requirement provided by the lenders, the borrower can receive multiple divisions from one or many loan providers. In process of loan matchmaking, the transaction matching unit 210 may provide one or more loan providers according to the ratio of the investment offered by those providers.

In one embodiment, the investment of interest allocation is calculated from the formula IN = LN × ((a% ÷ 12) × n); IN is interest, LN is loan amount, a% is annual interest and n is Term. For example, if the loan amount from one lender is 50,000 dollars, Term is 3 months, the annual interest is 19.98%, and then the Earning interest will be 2498 dollars after rounded up. If there are two lenders, A for 30,000 dollars and B for 20,000 dollars, the A's Earning interest will be 1,499 dollars, B's Earning interest will be 999 dollars after rounded up.

The loan matching platform system 200 further comprises a contract audit management unit 207, which is coupled to the transaction matching unit and assigns contracts between the lenders and the borrowers. Specifically, after the loan collection is finished, the contract assignment between borrowers and lenders is operated through the contract audit management unit 207. The loan agreement is stored in the contract audit management unit 207 for both sides following the agreement of loan transaction. The invention of the loan matching platform system 200 is authorized to perform operation related to the loan transaction. If the loan is defaulted, the system provides lenders with relevant legal advisory services.

The loan matching platform system 200 further comprises a traded fund management unit 208, which is coupled to the transaction matching unit, and manages trading operation of traded funds for the lenders and the borrowers including grants, loan repayment and service charge. Specifically, in the conditions of specifying the date, set the loan amount, payment schedule, setting the amount of investment, loan terms and annual interest, etc. traded funds precede trading operations including enabling lenders to make funds and borrowers to make payment via traded fund management unit 208. Wherein funding and payment operations generate loan trading process fee distributed in loan transaction.

In one embodiment, loan amount and the amount of investment include charged fee. The loan fee is calculated from formula: CN = 3.000 + (LN × m × 3%), and investment fee is calculated from formula: CN=IN×1%, CN is charged fee, LN is Loan amount, IN is amount of investment. If the Loan amount is 50,000 dollars, installment-period for two periods, and one lender, the loan fee is 6,000 dollars, the investment fee is 500 dollars. For two lenders, A's amount of investment is 30,000 and B's amount of investment is 20,000, thus the A's investment fee is 300 dollars, the B's investment fee is 200 dollars.

The loan matching platform system 200 further comprises a financial management unit 209 coupled to the transaction matching unit 210, which monitors financial operations of lenders and the borrowers, including payment and collection, call in arrears and bad debt. If the borrower's repayment or the lender's funding happens, the financial management unit 209 proceeds and recodes collection and payment operations after loan matching transaction. In the event of default, for instance, lenders and borrowers did not make funding or repayment on the due date, the financial management unit 209 will monitors and proceeds accrual loans or bad debt. In one embodiment, when the borrower fails to keep up with monthly repayment amounts, or has completely defaulted altogether, the debt becomes "bad debt". The financial management unit 209 can be dispatched real name contract action based on agreement that lenders and borrowers signing, and assists in subsequent issues of the lender claims or services of litigation and legal advice.

In another embodiment, The present invention of the loan matching platform system 200 further includes, but not limited to: marketing unit, planning unit, legal unit, system service unit, system maintenance unit and others to enable users to efficiently match loan requirement through the loan matching platform system according to the invention.

The present invention of the loan matching platform system 200 may provide multiple users safe and fast lending transactions over the Internet by client/server architecture for delivering loan transactions data, and the loan matching platform system 200 is mainly peer-to-peer technology for collaborative business model familiar with prior technology in the field, the same will not be described in detail herein. Specifically, the present invention is essentially cloud-based network interface, and any electronic device can enter the network communication to access the function according to the invention, wherein the electronic device includes, but not limited to: tablet PCs, notebook computers, desktop computers, mobile phones and PDA. In one embodiment, lenders can use the smart phone to view information on funding requirement through borrowing and lending information, and match loan transactions in the loan matching platform system.

Although the invention is similar to an network interface, it has most rigorous management and supervisory control for providing efficient investment quality control and risk assessment. Labor costs and lending operations are simplified, solving the shortcomings of indirect financial of traditional banking which has complex audit work and is required guarantee conditions. The invention has the advantage of free warranty, fast, completely anonymous and contractual guarantees. The lenders follow the borrower's credit rating to determine the amount of investment and investment interest. Indeed, by solving the current electronic problems and limitations on financial platform applications, the present invention is suitable for individual lenders for increasing the expected rate of investment return.

While the invention has been described in connection with what is considered the most practical and preferred embodiment, it is understood that this invention is not limited to the disclosed embodiment but is intended to cover various arrangements included within the spirit and scope of the broadest interpretation so as to encompass all such modifications and equivalent arrangements.

## Claims

1. A loan matching platform system, comprising:
an application operating unit (103) (203), providing a plurality of applicants to be lenders (202) or borrowers (201) in registration;
a membership information unit (104) (204), receiving and recording the application information of the lenders (202) and the borrowers (201);
a risk assessment unit (105) (205), auditing the borrower's loan information to generate a credit rating; and
a transaction matching unit (110) (210), coupled to the application operating unit (103) (203), the membership information unit (104) (204) and the risk assessment unit (105) (205), providing a loan matching between lenders (202) and borrowers (201), wherein the loan matching platform system is an interface of cloud computing network for matching loan between borrowers (201) and lenders (202).

2. The loan matching platform system as claimed in claim 1, wherein the credit rating is generated from credit parameters depending on borrower's (201) information, and supports lenders (202) to decide the amount of investment.

3. The loan matching platform system as claimed in claim 1, wherein the applicants are natural persons.

4. The loan matching platform system as claimed in claim 1, further comprising a loan information unit (206) coupled to the transaction matching unit (110) (210), providing the lenders (202) to post Online Funding Inquiries and investment information to the lenders (202).

5. The loan matching platform system as claimed in claim 4, wherein the investment information comprises investment ratio and interest calculated from the investment ratio.

6. The loan matching platform system as claimed in claim 5, wherein the transaction matching unit (110) (210) sends the investment ratio to at least one lender (202).

7. The loan matching platform system as claimed in claim 1, further comprising a contract audit management unit (207) coupled to the transaction matching unit (110) (210), assigning contracts between the lenders (202) and the borrowers (201).

8. The loan matching platform system as claimed in claim 1, further comprising a traded fund management unit (208) coupled to the transaction matching unit (110) (210), managing trading operation of traded funds for both the lenders (202) and the borrowers (201), including grants, loan repayment and service charge.

9. The loan matching platform system as claimed in claim 1, further comprising a financial management unit (209) coupled to the transaction matching unit (110) (210), monitoring financial operations of lenders (202) and the borrowers (201), including payment and collection, call in arrears and bad debt.

10. The loan matching platform system as claimed in claim 1, wherein the information of the lenders (202) and the borrowers (201) comprises personal information, member ID and password.
